# EUROPÄISCHE PATENTSCHRIFT

(11) **EP 2 917 608 B1**
(45) Veröffentlichungstag und Bekanntmachung des Hinweises auf die Patenterteilung: **03.02.2016**
(21) Anmeldenummer: 13770917.6
(22) Anmeldetag: 01.10.2013
(51) Int. Cl.: F16H 3/66, F16H 3/72

(54) **MEHRSTUFENGETRIEBE FÜR KRAFTFAHRZEUGE**
MULTISTAGE GEARBOX FOR MOTOR VEHICLES
TRANSMISSION À PLUSIEURS ÉTAGES POUR VÉHICULES AUTOMOBILES

(30) Priorität: 08.11.2012 AT 505022012
(43) Veröffentlichungstag der Anmeldung: 16.09.2015
(73) Patentinhaber: AVL List GmbH, 8020 Graz (AT)
(72) Erfinder: LICHTENEGGER, Stefan, A-8511 St. Stefan (AT)
(74) Vertreter: Babeluk, Michael
(86) Internationale Anmeldenummer: PCT/EP2013/070428
(87) Internationale Veröffentlichungsnummer: WO 2014/072129

(56) Entgegenhaltungen:
- WO-A1-2012/084370
- DE-A1-102007 057 529
- US-A1- 2002 119 859
- US-A1- 2004 053 729
- US-A1- 2004 266 581
- US-A1- 2006 068 965

## Beschreibung

Die Erfindung betrifft ein Mehrstufengetriebe für Kraftfahrzeuge mit mehreren Vorwärtsgängen und zumindest einem Rückwärtsgang, bestehend aus mehreren 3-Wellengetrieben und mehreren Schaltelementen, mit einer Antriebswelle, einer Abtriebswelle und mehreren Getriebewellen, Differenzwellen und Summenwellen, wobei eine erste Differenzwelle eines ersten 3-Wellengetriebes, insbesondere über eine erste Getriebewelle, mit einer ersten Differenzwelle eines zweiten 3-Wellengetriebes drehfest in Verbindung steht, die Antriebswelle und eine Summenwelle eines zweiten 3-Wellengetriebes drehfest in Verbindung stehen, eine vierte Getriebewelle und eine zweite Differenzwelle eines zweiten 3-Wellengetriebes drehfest in Verbindung stehen und die vierte Getriebewelle oder eine fünfte Getriebewelle mit einer ersten Differenzwelle eines dritten 3-Wellengetriebes drehfest in Verbindung steht und eine dritte Getriebewelle und eine zweite Differenzwelle eines ersten 3-Wellengetriebes drehfest in Verbindung stehen.

Derartige Mehrstufengetriebe mit mehreren Vorwärtsgängen und zumindest einem Rückwertsgang werden üblicherweise bei Kraftfahrzeugen eingesetzt.

Die WO 2012/084 370 A1 offenbart ein Mehrstufengetriebe in Planetenbauweise der eingangs genannten Art, mit einem Gehäuse, in welchem drei Planetensätze und mehrere Wellen aufgenommen sind. Mittels gezielter Betätigung von als Bremsen und Kupplungen ausgebildeten Schaltelementen können verschiedene Übersetzungsverhältnisse zwischen einer Antriebs- und einer Abtriebswelle dargestellt werden.

Aufgabe der Erfindung ist es, bei einem Getriebe der eingangs genannten Art mit geringem Aufwand und Platzbedarf eine hohe Funktionalität zu erreichen.

Erfindungsgemäß wird dies dadurch erreicht, dass eine Summenwelle eines ersten 3-Wellengetriebes, vorzugsweise über eine zweite Getriebewelle, mit einer Summenwelle eines dritten 3-Wellengetriebes drehfest verbunden ist, und dass die Abtriebswelle und eine zweite Differenzwelle eines dritten 3-Wellengetriebes drehfest in Verbindung stehen.

Unter 3-Wellengetrieben werden hier insbesondere Planetengetriebe verstanden. Bei einem 3-Wellengetriebe gibt es unabhängig von der Bauart immer zwei Wellen, welche bezogen auf das Wellenmoment immer das gleiche Vorzeichen besitzen, und eine Welle mit entgegengesetztem Vorzeichen. Die Wellen mit gleichen Vorzeichen werden als Differenzwellen bezeichnet, die Welle mit entgegengesetztem Vorzeichen wird als Summenwelle bezeichnet. Als Stegwelle wird jene Welle bezeichnet, welche nur Kupplungsleistung übertragen kann. Wellen, welche sowohl Kupplungsleistung als auch Wälzleistung übertragen können werden als Zentralwellen bezeichnet.

Ein 3-Wellengetriebe besitzt ein eindeutiges Momenten- und Drehzahlverhalten in Bezug auf die Differenz- und Summenwellen. Um aber ein 3-Wellengetriebe kinematisch zu beschreiben behilft man sich der sogenannten Standübersetzung. Die Standübersetzung ist definiert als die Übersetzung zwischen den beiden Zentralwellen bei still stehender Stegwelle. Die Standübersetzung kann positiv oder negativ sein, und das wiederum macht eine Unterscheidung in sogenannte Plus- und Minusgetrieben notwendig.

Ein Minusgetriebe bezeichnet ein 3-Wellengetriebe, bei dem beide Zentralwellen zugleich die Differenzwellen darstellen, die übrige Stegwelle ist hierbei die Summenwelle.

Ein Plusgetriebe bezeichnet ein 3-Wellengetriebe, bei dem die Stegwelle und eine der beiden Zentralwellen die Differenzwellen darstellen, die übrige Zentralwelle ist dann die Summenwelle.

Bei einem einfachen Planetenradsatz mit nur einem Planetenrad, welcher einerseits mit dem Sonnenrad kämmt und andererseits auch mit dem Hohlrad kämmt, sind die beiden Zentralwellen Sonnenrad und Hohlrad die Differenzwellen, die Stegwelle ist die Summenwelle. Dieser Planetensatz besitzt also die Kinematik eines Minusgetriebes.

Bei einem Planetenradsatz mit einem oder mehreren Planetenradpaaren, wobei jeweils das erste Planetenrad mit dem Sonnenrad und dem zweiten Planetenrad, und das zweite Planetenrad mit dem Hohlrad und dem ersten Planetenrad kämmt, bilden die Stegwelle und das Sonnenrad als erste Zentralwelle die Differenzwellen, das Hohlrad als zweite Zentralwelle ist die Summenwelle. Dieser Planetensatz besitzt also die Kinematik eines Plusgetriebes.

Im vorliegenden Fall können entweder alle oder einige zumindest zwei der 3-Wellengetriebe als Minusgetriebe - beispielsweise als einfache Stirnrad-Planetengetriebe mit einem Planetenrad- oder als Plusgetriebe - beispielsweise als einfache Stirnrad-Planetengetriebe mit zumindest einem Planetenradpaar - ausgebildet sein.

Zumindest eines der 3-Wellengetriebe - vorzugsweise das zweite 3-Wellengetriebe - kann als Plusgetriebe - vorzugsweise mit zwei Gruppen von miteinander kämmenden Planetenrädern - ausgebildet sein.

Die erste Differenzwelle des ersten 3-Wellengetriebes und die erste Differenzwelle des zweiten 3-Wellengetriebes können über ein - vorzugsweise als Bremse ausgeführtes - erstes Schaltelement blockiert werden.

Weiters kann in einer einfachen Ausführung auch die zweite Differenzwelle des ersten 3-Wellengetriebes über ein - vorzugsweise als Bremse ausgeführtes - zweites Schaltelement blockiert werden. Stattdessen kann aber auch vorgesehen sein, dass die zweite Differenzwelle des ersten 3-Wellengetriebes mit einer elektrischen Maschine drehverbunden ist.

Die zweite Differenzwelle des zweiten 3-Wellengetriebes ist vorteilhafterweise über ein - vorzugsweise als Wellenkupplung ausgeführtes - drittes Schaltelement, mit der Summenwelle des dritten 3-Wellengetriebes drehverbindbar.

Ein vorzugsweise als Wellenkupplung ausgeführtes viertes Schaltelement kann weiters zwischen der zweiten Differenzwelle des zweiten 3-Wellengetriebes und der ersten Differenzwelle des dritten 3-Wellengetriebes vorgesehen sein.

Weiters kann die erste Differenzwelle des ersten 3-Wellengetriebes und die erste Differenzwelle des zweiten 3-Wellengetriebes über ein - vorzugsweise als Wellenkupplung ausgeführtes - fünftes Schaltelement mit der ersten Differenzwelle des dritten 3-Wellengetriebes drehverbunden werden. Alternativ dazu kann aber auch im Rahmen der Erfindung vorgesehen sein, dass die erste Differenzwelle des ersten 3-Wellengetriebes und die erste Differenzwelle des zweiten 3-Wellengetriebes über ein - vorzugsweise als Wellenkupplung ausgeführtes - fünftes Schaltelement mit der zweiten Differenzwelle des zweiten 3-Wellengetriebes drehverbindbar ist.

Eine besonders hohe Flexibilität bei der Wahl der Übersetzungsverhältnisse kann erzielt werden, wenn die Summenwelle des zweiten 3-Wellengetriebes über ein - vorzugsweise als Wellenkupplung ausgeführtes - sechstes Schaltelement, mit einer ersten Differenzwelle des dritten 3-Wellengetriebes drehverbindbar ist.

Bei einigen oder allen Schaltelementen kann es sich um kraft- oder formschlüssige Schaltelemente wie zum Beispiel Lamellenkupplungen oder Lamellenbremsen oder Klauenkupplungen handeln. Sofern ein oder mehrere formschlüssige Schaltelemente vorgesehen sind, kann einzelnen oder jedem dieser eine Synchronisiereinrichtung zugeordnet sein, oder eine zentrale, mechanische oder elektrische Synchronisiereinrichtung im Getriebe angeordnet sein.

Die 3-Wellengetriebe sind dabei somit derart angeordnet, dass sich - mit der Antriebswelle und der Abtriebswelle - insgesamt sieben bzw. sechs drehbare Getriebewellen ergeben. Dabei steht die erste Differenzwelle des ersten 3-Wellengetriebes über eine erste Getriebewelle mit der ersten Differenzwelle des zweiten 3-Wellengetriebes drehfest in Verbindung. Die Summenwelle des ersten 3-Wellengetriebes steht über die zweite Getriebewelle mit der Summenwelle des dritten 3-Wellengetriebes drehfest in Verbindung. Die Antriebswelle und die Summenwelle des zweiten 3-Wellengetriebes stehen drehfest miteinander in Verbindung. Auch die Abtriebswelle und die zweite Differenzwelle des dritten 3-Wellengetriebes stehen drehfest miteinander in Verbindung. Die dritte Getriebewelle und die zweite Differenzwelle des ersten 3-Wellengetriebes sind drehfest miteinander verbunden, ebenso die vierte Getriebewelle und die zweite Differenzwelle des zweiten 3-Wellengetriebes. Die fünfte Getriebewelle steht mit der ersten Differenzwelle des dritten 3-Wellengetriebes drehfest in Verbindung.

Die Schaltelemente sind derart angeordnet, dass in jedem schaltbaren Gang immer drei bzw. zwei Schaltelemente zugleich aktiv sein müssen, um Zwangslauf im Getriebe herzustellen, indem die erste Getriebewelle über das erste Schaltelement, ausgeführt als Bremse, mit dem stillstehendem Gehäuse gekoppelt werden kann, die dritte Getriebewelle über ein zweites Schaltelement - ausgeführt als Bremse - mit dem stillstehenden Gehäuse gekoppelt werden kann, die zweite Getriebewelle über ein drittes Schaltelement - ausgeführt als Wellenkupplung - mit der vierten Getriebewelle gekoppelt werden kann, die vierte Getriebewelle über ein viertes Schaltelement - ausgeführt als Wellenkupplung - mit der fünften Getriebewelle gekoppelt werden kann und die erste Getriebewelle über ein fünftes Schaltelement - ausgeführt als Wellenkupplung - mit der fünften Getriebewelle gekoppelt werden kann.

Die Erfindung wird im Folgenden anhand der Fig. näher erläutert. Es zeigen:
- Fig. 1: ein erfindungsgemäßes Mehrstufengetriebe in einer ersten Ausführungsvariante;
- Fig. 2: eine Schaltmatrix dieses Mehrstufengetriebes;
- Fig. 3: mögliche Schaltungen der Vorwärtsgänge dieses Mehrstufengetriebes;
- Fig. 4: ein erfindungsgemäßes Mehrstufengetriebe in einer zweiten Ausführungsvariante;
- Fig. 5: eine Schaltmatrix dieses Mehrstufengetriebes;
- Fig. 6: mögliche Schaltungen der Vorwärtsgänge dieses Mehrstufengetriebes;
- Fig. 7: ein erfindungsgemäßes Mehrstufengetriebe in einer dritten Ausführungsvariante;
- Fig. 8: eine Schaltmatrix dieses Mehrstufengetriebes;
- Fig. 9: mögliche Schaltungen der Vorwärtsgänge bei Verwendung dieser Schaltmatrix;
- Fig. 10: eine weitere mögliche Schaltmatrix dieses Mehrstufengetriebes;
- Fig. 11: mögliche Schaltungen der Vorwärtsgänge bei Verwendung der Schaltmatrix aus Fig. 10;
- Fig. 12: ein erfindungsgemäßes Mehrstufengetriebe in einer vierten Ausführungsvariante;
- Fig. 13: ein erfindungsgemäßes Mehrstufengetriebe in einer fünften Ausführungsvariante;
- Fig. 14: eine Schaltmatrix dieses Mehrstufengetriebes; und
- Fig. 15: ein erfindungsgemäßes Mehrstufengetriebe in einer sechsten Ausführungsvariante.

Die Anordnung der Getriebeelemente - wie beispielsweise Wellen, Zahnräder oder Schaltelemente - zueinander ist in den Figuren zu den Ausführungsvarianten dargestellt.

In den verschiedenen Ausführungsvarianten sind funktionsgleiche Teile mit gleichen Bezugszeichen versehen.

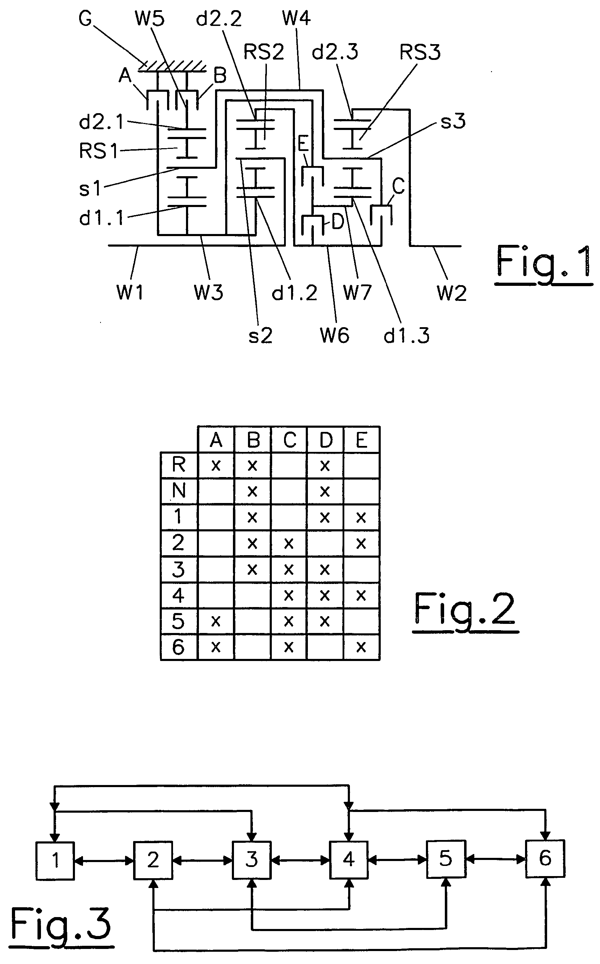

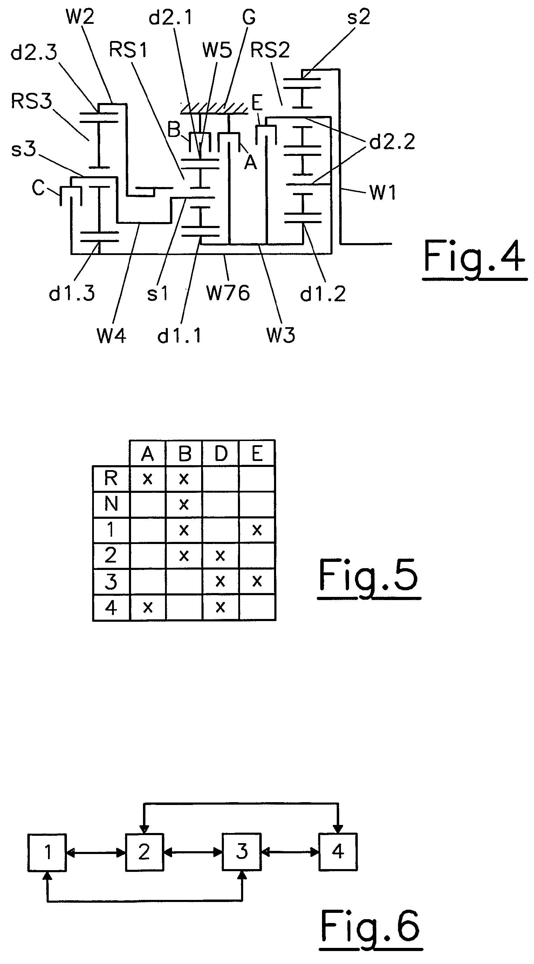

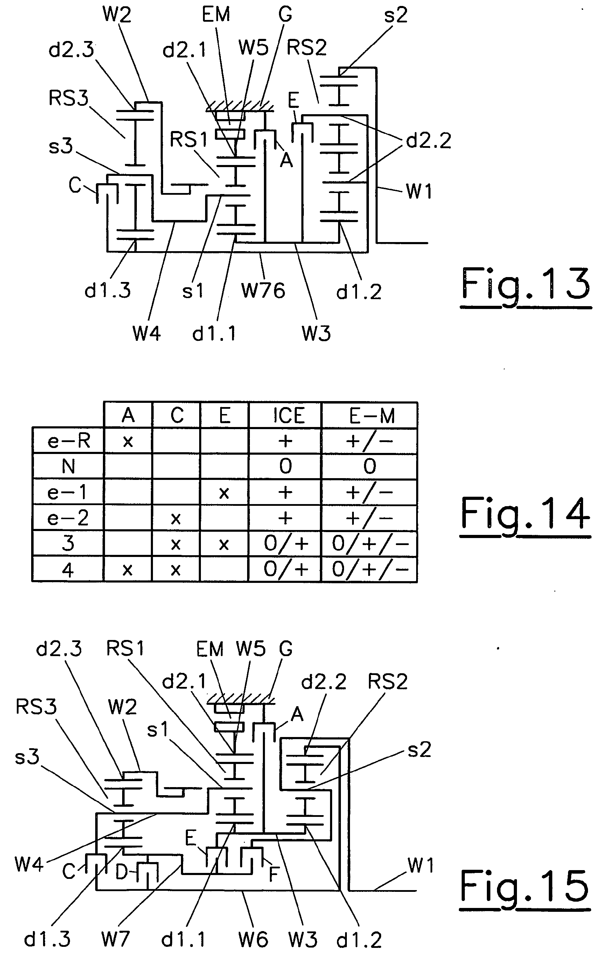

Die Fig. 1, Fig. 4, Fig. 7, Fig. 12, Fig. 13 und Fig. 15 zeigen verschiedene mehrstufige Automatikgetriebe (Mehrstufengetriebe) für Kraftfahrzeuge mit mehreren Vorwärtsgängen 1, 2, 3, 4, 5, 6, 7, 8, einem Leerlauf N und einem oder zwei Rückwärtsgängen R1, R2, mit jeweils einem Gehäuse G, in welchem jeweils - durch Planetengetriebe gebildete - erste, zweite und dritte 3-Wellengetriebe RS1, RS2, RS3 angeordnet sind. Jedes Mehrstufengetriebe weist eine mit einer nicht weiter dargestellten Brennkraftmaschine verbundene Antriebswelle W1 und eine Abtriebswelle W2, sowie weitere Getriebewellen W3, W4, W5, W6, W7 (Fig. 1, Fig. 7, Fig. 12, Fig. 15) bzw. W76 (Fig. 4, Fig. 13) - auf. Mit A, B, C, D, E und F sind Schaltelemente bezeichnet, mittels deren gezielte Betätigung verschiedene Übersetzungsverhältnisse zwischen einer Antriebs- und einer Abtriebswelle W1, W2 dargestellt werden können.

Im Folgenden werden die 3-Wellengetriebe RS1, RS2, RS3 mit den Begriffen Summenwelle und Differenzwelle beschrieben. Es kann sich bei einigen oder allen verwendeten 3-Wellengetriebe RS1, RS2, RS3 um einfache Planetenradsätze - ausgeführt als Minusgetriebe oder Plusgetriebe - handeln. Bei einigen oder allen Schaltelementen A, B, C, D, E und F kann es sich um kraft- oder formschlüssige Schaltelemente wie z.B. Lamellenkupplungen oder Lamellenbremsen bzw. Klauenkupplungen handeln. Sofern ein oder mehrere formschlüssige Schaltelemente vorgesehen sind, kann einzelnen oder jedem dieser eine Synchronisiereinrichtung zugeordnet sein, oder eine zentrale, mechanische oder elektrische Synchronisiereinrichtung im Getriebe angeordnet sein.

Die 3-Wellengetriebe RS1, RS2, RS3 sind derart im Mehrstufengetriebe angeordnet, dass sich insgesamt sieben (bzw. sechs) drehbare Wellen - Antriebswelle W1, Abtriebswelle W2, Getriebewellen W3, W4, W5, W6, W7 (bzw. W76 an Stelle W6 und W7) ergeben, indem eine erste Differenzwelle d1.1 eines ersten 3-Wellengetriebes RS1 über eine erste Getriebewelle W3 mit einer ersten Differenzwelle d1.2 eines zweiten 3-Wellengetriebes RS2 drehfest in Verbindung steht, die Summenwelle s1 eines ersten 3-Wellengetriebes RS1 über eine zweite Getriebewelle W4 mit der Summenwelle s3 eines dritten 3-Wellengetriebes RS3 drehfest in Verbindung steht, die Antriebswelle W1 und die Summenwelle s2 eines zweiten 3-Wellebgetriebes RS2 drehfest in Verbindung stehen, die Abtriebswelle W2 und eine zweite Differenzwelle d2.3 eines dritten 3-Wellengetriebes RS3 drehfest in Verbindung stehen, eine dritte Getriebewelle W5 und eine zweite Differenzwelle d2.1 eines ersten 3-Wellengetriebes RS 1 drehfest in Verbindung stehen, eine vierte Getriebewelle W6 und eine zweite Differenzwelle d2.2 eines zweiten 3-Wellengetriebes RS2 drehfest in Verbindung stehen und eine fünfte Getriebewelle W7 mit einer ersten Differenzwelle d1.3 eines dritten 3-Wellengetriebes RS3 drehfest in Verbindung stehen.

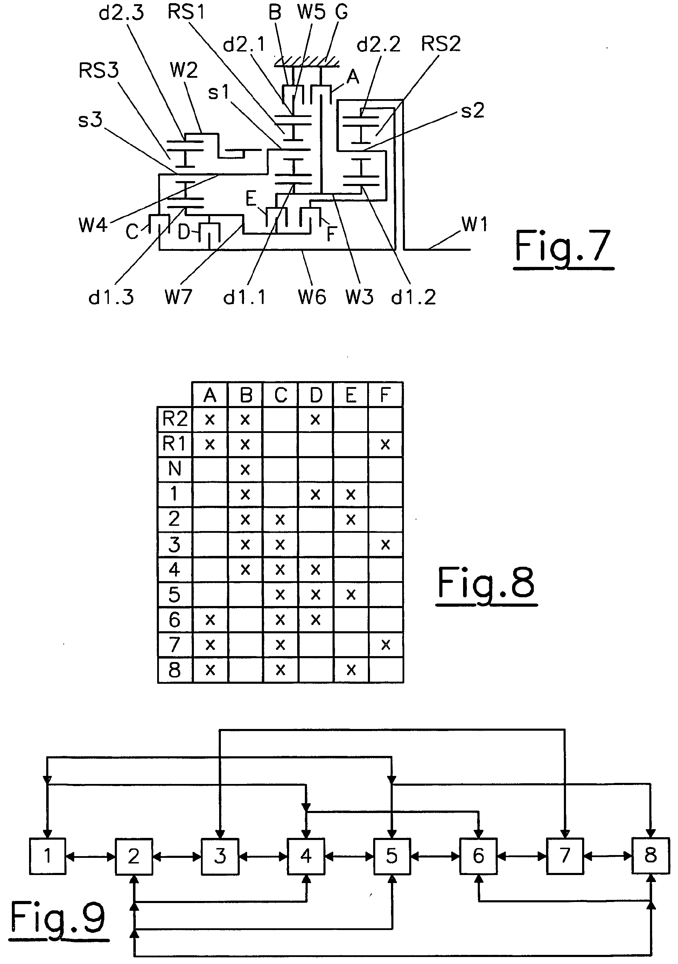

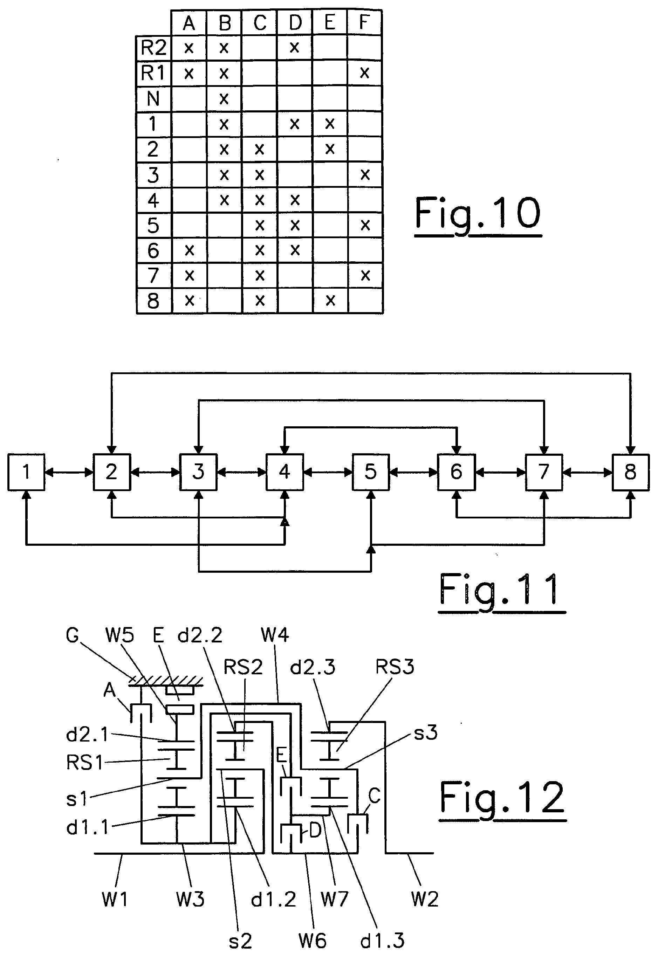

Die Schaltelemente A, B, C, D, E (Fig. 2); A, B, C, D, E, F (Fig. 8, Fig. 10) sind in den Ausführungsvarianten nach Fig. 1, Fig. 7, Fig. 12 und Fig. 15 jeweils derart angeordnet, dass in jedem schaltbaren Gang R bzw. R1, R2; 1, 2, 3, 4, 5, 6; 7, 8 immer drei (Fig. 2, Fig. 8 und Fig. 10) bzw. zwei (Fig. 5, Fig. 14) Schaltelemente zugleich aktiv sein müssen, um einen Zwangslauf im Mehrstufengetriebe herzustellen. Dabei kann die erste Getriebewelle W3 über ein erstes Schaltelement A - ausgeführt als Bremse - mit dem stillstehendem Gehäuse G, die dritte Getriebewelle W5 über ein zweites Schaltelement B - ausgeführt als Bremse - mit dem stillstehenden Gehäuse G, die zweite Getriebewelle W4 über ein drittes Schaltelement C - ausgeführt als Wellenkupplung - mit der vierten Getriebewelle W6, die vierte Getriebewelle W6 über ein viertes Schaltelement D - ausgeführt als Wellenkupplung - mit der fünften Getriebewelle W7 und die erste Getriebewelle W3 über ein sechstes Schaltelement E, ausgeführt als Kupplung mit der Getriebewelle W7 gekoppelt werden.

Fig. 1 zeigt eine mögliche erste Ausführung eines derartigen Mehrstufengetriebes, bei der die 3-Wellengetriebe RS1, RS2 und RS3 als einfache Stirnrad-Planetengetriebe mit einem Planetenrad, also als Minusgetriebe ausgeführt sind. Das zweite 3-Wellengetriebe RS2 ist hierbei axial zwischen den beiden anderen 3-Wellengetrieben RS1, RS3 angeordnet, wobei das mit der Abtriebswelle W2 verbundene dritte 3-Wellengetriebe RS3 abtriebsseitig angeordnet ist. Somit ergibt sich eine für eine Längsanordnung des Getriebes vorteilhafte Ausgestaltung des Getriebes.

Fig. 2 zeigt eine Schaltmatrix zur Demonstration der Schaltstellungen der einzelnen Schaltelemente A, B, C, D, E in den jeweiligen Gängen R, N, 1, 2, 3, 4, 5, 6 der in Fig. 1 gezeigten Anordnung. Es ergeben sich sechs Vorwärtsgänge 1, 2, 3, 4, 5, 6 und ein Rückwärtsgang R.

Mit dieser Anordnung aus Fig. 1 lassen sich beispielsweise folgende Standübersetzung i_{0RS1}, i_{0RS2}, i_{0RS3} der 3-Wellengetriebe RS1, RS2 und RS3 realisieren:

| | |
|---|---|
| **i_{0RS1}** | -1.654 |
| **i_{0RS2}** | -3.920 |
| **i_{0RS3}** | -4.750 |

Des Weiteren können beispielsweise folgende Gangübersetzungen i und Stufensprünge (p erreicht werden:

| | **i** | **ϕ** | |
|---|---|---|---|
| **1** | 4.071 | | 6.186 |
| **2** | 2.05 | 1.986 | |
| **3** | 1.336 | 1.534 | |
| **4** | 1 | 1.336 | |
| **5** | 0.797 | 1.255 | |
| **6** | 0.658 | 1.211 | |
| **R** | -3.78 | | |

Fig. 3 zeigt die möglichen Schaltungen der Vorwärtsgänge 1, 2, 3, 4, 5, 6 der in Fig. 1 gezeigten Anordnung, die durch das bloße Deaktivieren nur eines einzigen Schaltelementes und das Aktivieren eines anderen Schaltelementes darstellbar sind.

Entfällt das vierte Schaltelement D und vereint man die vierte und fünfte Getriebewellen 6 und 7 zu einer Getriebewelle 76, so entsteht eine Anordnung mit drei 3-Wellengetrieben RS1, RS2 und RS3, vier Schaltelementen A, B, C und E und sechs Getriebewellen 1, 2, 3, 4, 5 und 67, wie in Fig. 4 dargestellt ist. Bei der in Fig. 4 gezeigten Ausführung sind das erste und das dritte 3-Wellengetriebe RS1, RS3 als einfache Stirnrad-Planetengetriebe mit einem Planetenrad, also als Minusgetriebe und das zweite 3-Wellengetriebe RS2 als einfaches Stirnrad-Planetengetriebe mit einem Planetenradpaar bzw. mit zwei Gruppen von miteinander kämmenden Planetenrädern - also als Plusgetriebe - ausgeführt.

Durch die Ausführung als Plusgetriebe wird die Summenwelle s2 durch das Hohlrad gebildet und ist somit bezüglich des Packaging vorteilhaft an die Antriebswelle W1 anbindbar. Des Weiteren sind alle Schaltelemente A, B, C, E bezogen auf deren axiale Position radial außerhalb der leistungsübertragenden Wellen angeordnet und somit vorteilhaft von außen zugänglich.

Fig. 5 zeigt eine Schaltmatrix zur Erläuterung der Schaltstellungen der einzelnen Schaltelemente A, B, C, E in den jeweiligen Gängen R, N, 1, 2, 3, 4 der in Fig. 4 dargestellten Anordnung. Es ergeben sich vier Vorwärtsgänge 1, 2, 3, 4 und ein Rückwärtsgang R.

Fig. 6 zeigt die möglichen Schaltungen der Vorwärtsgänge 1, 2, 3, 4 der in Fig. 4 gezeigten Anordnung, die rein durch das Deaktivieren eines einzigen Schaltelementes und das Aktivieren eines anderen Schaltelementes darstellbar sind.

Erweitert man die in Fig. 1 beschriebene Anordnung durch ein sechstes Schaltelement F, mit welchem die Antriebswelle W1 und die fünfte Getriebewelle W7 drehfest gekoppelt werden kann, so ergibt sich eine Anordnung mit drei 3-Wellengetrieben RS1, RS2 und RS3, sechs Schaltelementen A, B, C, D, E und F und sieben Wellen W1, W2, W3, W4, W5, W6 und W7 im Mehrstufengetriebe, wie in Fig. 7 dargestellt. Bei der in Fig. 7 gezeigten Ausführung sind die 3-Wellengetriebe RS1, RS2 und RS3 als einfache Stirnrad-Planetengetriebe mit einem Planetenrad bzw. einer Planetenradgruppe - also als Minusgetriebe - ausgeführt.

Fig. 8 zeigt eine Schaltmatrix zur Erläuterung der Schaltstellungen der einzelnen Schaltelemente A, B, C, D, E, F in den jeweiligen Gängen der in Fig. 7 dargestellten Anordnung. Es ergeben sich acht Vorwärtsgänge 1, 2, 3, 4, 5, 6, 7, 8 und zwei Rückwärtsgänge R1, R2.

Fig. 9 zeigt die möglichen Schaltungen der Vorwärtsgänge der in Fig. 8 gezeigten Schaltmatrix, die rein durch das Deaktivieren eines einzigen Schaltelementes und das Aktivieren eines anderen Schaltelementes darstellbar sind.

Fig. 10 zeigt eine weitere mögliche Schaltmatrix zur Erläuterung der Schaltstellungen der einzelnen Schaltelemente A, B, C, D, E, F in den jeweiligen Gängen des in Fig. 7 dargestellten Mehrstufengetriebes. Es ergeben sich ebenfalls acht Vorwärtsgänge 1, 2, 3, 4, 5, 6, 7, 8 und zwei Rückwärtsgange R1, R2.

Fig. 11 zeigt die möglichen Schaltungen der Vorwärtsgänge der in Fig. 10 gezeigten Schaltmatrix, die rein durch das Deaktivieren eines einzigen Schaltelementes und das Aktivieren eines anderen Schaltelementes darstellbar sind.

Durch Ersetzen eines der Schaltelemente A, B - beispielsweise des Schaltelementes B - der in den Fig. 1, Fig. 4 und Fig. 7 dargestellten Ausführungsvarianten durch einen Elektromotor EM ergeben sich weitere Anordnungen mit mehreren leistungsverzweigten Fahrbereichen und mehreren schaltbaren Gängen. Dadurch ist es möglich große Gangsprünge stufenlos elektrodynamisch auszugleichen, was sich vorteilhaft auf den Fahrkomfort auswirkt. Bevorzugt wird ein als Bremse ausgeführtes Schaltelement - insbesondere das Schaltelement B - durch einen Elektromotor EM ersetzt.

Fig. 12 zeigt eine auf dem in Fig. 1 gezeigten Mehrstufengetriebe basierende Ausführung, bei der das Schaltelement B durch einen Elektromotor EM ersetzt ist.

Fig. 13 zeigt eine auf dem in Fig. 4 gezeigten Mehrstufengetriebe basierende Ausführung, bei der das Schaltelement B durch einen Elektromotor EM ersetzt ist.

Fig. 14 zeigt eine Schaltmatrix zur Erläuterung der Schaltstellungen der einzelnen Schaltelemente A, C, E, die möglichen Zustände der Antriebe ICE der Brennkraftmaschine und E-M der elektrischen Maschine EM der in Fig. 13 gezeigten Anordnung. Es ergeben sich drei stufenlos leistungsverzweigte Fahrbereiche e-R, e-1, e-2 , davon zwei für Vorwärtsfahrt e-1, e-2 und einer für Rückwärtsfahrt eR, und zwei Vorwärtsgänge 3, 4.

Fig. 15 zeigt eine auf dem in Fig. 7 gezeigten Mehrstufengetriebe basierende Ausführung, bei der das Schaltelement B durch einen Elektromotor EM ersetzt ist.

## Patentansprüche

1. Mehrstufengetriebe für Kraftfahrzeuge mit mehreren Vorwärtsgängen und zumindest einem Rückwärtsgang, bestehend aus mehreren 3-Wellengetrieben und mehreren Schaltelementen, mit einer Antriebswelle (W1), einer Abtriebswelle (W2) und mehreren Getriebewellen, Differenzwellen und Summenwellen, wobei eine erste Differenzwelle (d1.1) eines ersten 3-Wellengetriebes (RS1), insbesondere über eine erste Getriebewelle (W3), mit einer ersten Differenzwelle (d1.2) eines zweiten 3-Wellengetriebes (RS2) drehfest in Verbindung steht, die Antriebswelle (W1) und eine Summenwelle (s2) des zweiten 3-Wellengetriebes (RS2) drehfest in Verbindung stehen, eine vierte Getriebewelle (W6;W76) und eine zweite Differenzwelle (d2.2) des zweiten 3-Wellengetriebes (RS2) drehfest in Verbindung stehen und die vierte Getriebewelle (W6; W76) oder eine fünfte Getriebewelle (W7) mit einer ersten Differenzwelle (d1.3) eines dritten 3-Wellengetriebes (RS3) drehfest in Verbindung steht und eine dritte Getriebewelle (W5) und eine zweite Differenzwelle (d2.1) des ersten 3-Wellengetriebes (RS1) drehfest in Verbindung stehen, **dadurch gekennzeichnet, dass** eine Summenwelle (s1) des ersten 3-Wellengetriebes (RS1), vorzugsweise über eine zweite Getriebewelle (W4), mit einer Summenwelle (s3) des dritten 3-Wellengetriebes (RS3) drehfest verbunden ist, und dass die Abtriebswelle (W2) und eine zweite Differenzwelle (d2.3) des dritten 3-Wellengetriebes (RS3) drehfest in Verbindung stehen.

2. Mehrstufengetriebe nach Anspruch 1, **dadurch gekennzeichnet, dass** das zweite 3-Wellengetriebe (RS2) als Plusgetriebe - vorzugsweise mit zwei Gruppen von miteinander kämmenden Planetenrädern - ausgebildet ist (Fig. 4, Fig. 13).

3. Mehrstufengetriebe nach Anspruch 1 oder 2, **dadurch gekennzeichnet, dass** die erste Differenzwelle (d1.1) des ersten 3-Wellengetriebes (RS1) und die erste Differenzwelle (d1.2) des zweiten 3-Wellengetriebes (RS2) über ein - vorzugsweise als Bremse ausgeführtes - erstes Schaltelement (A) blockierbar ist.

4. Mehrstufengetriebe nach einem der Ansprüche 1 bis 3, **dadurch gekennzeichnet, dass** die zweite Differenzwelle (d2.1) des ersten 3-Wellengetriebes (RS1) über ein - vorzugsweise als Bremse ausgeführtes - zweites Schaltelement (B) blockierbar ist.

5. Mehrstufengetriebe nach einem der Ansprüche 1 bis 4, **dadurch gekennzeichnet, dass** die erste oder zweite Differenzwelle (d1.1, d2.1) des ersten 3-Wellengetriebes (RS1) mit einer elektrischen Maschine (EM) drehverbunden ist (Fig. 12, Fig. 13, Fig. 15).

6. Mehrstufengetriebe nach einem der Ansprüche 1 bis 5, **dadurch gekennzeichnet, dass** die zweite Differenzwelle (d2.2) des zweiten 3-Wellengetriebes (RS2) über ein - vorzugsweise als Wellenkupplung ausgeführtes - drittes Schaltelement (C), mit der Summenwelle (s3) des dritten 3-Wellengetriebes (RS3) drehverbindbar ist.

7. Mehrstufengetriebe nach einem der Ansprüche 1 bis 6, **dadurch gekennzeichnet, dass** die zweite Differenzwelle (d2.2) des zweiten 3-Wellengetriebes (RS2) über ein - vorzugsweise als Wellenkupplung ausgeführtes - viertes Schaltelement (D), mit der ersten Differenzwelle (d1.3) des dritten 3-Wellengetriebes (RS3) drehverbindbar ist (Fig. 1, Fig. 7).

8. Mehrstufengetriebe nach einem der Ansprüche 1 bis 7, **dadurch gekennzeichnet, dass** die erste Differenzwelle (d1.1) des ersten 3-Wellengetriebes (RS1) und die erste Differenzwelle (d1.2) des zweiten 3-Wellengetriebes (RS2) über ein - vorzugsweise als Wellenkupplung (E) ausgeführtes - fünftes Schaltelement (E) mit der ersten Differenzwelle (d1.3) des dritten 3-Wellengetriebes (RS3) drehverbindbar ist (Fig. 1, Fig. 7).

9. Mehrstufengetriebe nach einem der Ansprüche 1 bis 7, **dadurch gekennzeichnet, dass** die erste Differenzwelle (d1.1) des ersten 3-Wellengetriebes (RS1) und die erste Differenzwelle (d1.2) des zweiten 3-Wellengetriebes (RS2) über ein - vorzugsweise als Wellenkupplung (E) ausgeführtes - fünftes Schaltelement (E) mit der zweiten Differenzwelle (d2.2) des zweiten 3-Wellengetriebes (RS2) drehverbindbar ist (Fig. 4).

10. Mehrstufengetriebe nach einem der Ansprüche 1 bis 9, **dadurch gekennzeichnet, dass** die Summenwelle (s2) des zweiten 3-Wellengetriebes (RS2) über ein - vorzugsweise als Wellenkupplung ausgeführtes - sechstes Schaltelement (F), mit ersten Differenzwelle (d1.3) des dritten 3-Wellengetriebes (RS3) drehverbindbar ist (Fig. 7).

## Claims

1. Multistage gearbox for motor vehicles with a plurality of forward gears and at least one reverse gear, comprising a plurality of 3-shaft gearboxes and a plurality of shifting elements, with a drive shaft (W1), an output shaft (W2) and a plurality of gearbox shafts, differential shafts and sum shafts, wherein a first differential shaft (d1.1) of a first 3-shaft gearbox (RS1) is connected for conjoint rotation, via a first gearbox shaft (W3), to a first differential shaft (d1.2) of a second 3-shaft gearbox (RS2); the drive shaft (W1) and a sum shaft (s2) of a second 3-shaft gearbox (RS2) are connected for conjoint rotation; a fourth gearbox shaft (W6; W76) and a second differential shaft (d2.2) of the second 3-shaft gearbox (RS2) are connected for conjoint rotation; the fourth gearbox shaft (W6; W76) or a fifth gearbox shaft (W7) is connected for conjoint rotation to a first differential shaft (d1.3) of a third 3-shaft gearbox (RS3); and a third gearbox shaft (W5) and a second differential shaft (d2.1) of the first 3-shaft gearbox (RS1) are connected for conjoint rotation, **characterised in that** a sum shaft (s1) of the first 3-shaft gearbox (RS1) is connected for conjoint rotation to a sum shaft (s3) of the third 3-shaft gearbox (RS3), preferably via a second gearbox shaft (W4), and that the output shaft (W2) and a second differential shaft (d2.3) of the third 3-shaft gearbox (RS3) are connected for conjoint rotation.

2. Multistage gearbox according to claim 1, **characterised in that** the second 3-shaft gearbox (RS2) is configured as a plus-gearbox, preferably with two groups of mutually meshing planet gears (Fig. 4, Fig. 13).

3. Multistage gearbox according to claim 1 or 2, **characterised in that** the first differential shaft (d1.1) of the first 3-shaft gearbox (RS1) and the first differential shaft (d1.2) of the second 3-shaft gearbox (RS2) may be prevented from turning by means of a first shifting element (A), preferably configured as a brake.

4. Multistage gearbox according to any of claims 1 to 3, **characterised in that** the second differential shaft (d2.1) of the first 3-shaft gearbox (RS1) may be prevented from turning by means of a second shifting element (B), preferably configured as a brake.

5. Multistage gearbox according to any of claims 1 to 4, **characterised in that** the first or second differential shaft (d1.1, d2.1) of the first 3-shaft gearbox (RS1) may be rotation-connected to an electric motor (EM) (Fig. 12, Fig. 13, Fig. 15).

6. Multistage gearbox according to any of claims 1 to 5, **characterised in that** the second differential shaft (d2.2) of the second 3-shaft gearbox (RS2) may be rotation-connected to the sum shaft (s3) of the third 3-shaft gearbox (RS3) by means of a third shifting element (C), preferably configured as a shaft coupling.

7. Multistage gearbox according to any of claims 1 to 6, **characterised in that** the second differential shaft (d2.2) of the second 3-shaft gearbox (RS2) may be rotation-connected to the first differential shaft (d1.3) of the third 3-shaft gearbox (RS3) by means of a fourth shifting element (D), preferably configured as a shaft coupling (Fig. 1, Fig. 7).

8. Multistage gearbox according to any of claims 1 to 7, **characterised in that** the first differential shaft (d1.1) of the first 3-shaft gearbox (RS1) and the first differential shaft (d1.2) of the second 3-shaft gearbox (RS2) may be rotation-connected to the first differential shaft (d1.3) of the third 3-shaft gearbox (RS3) by means of a fifth shifting element (E), preferably configured as a shaft coupling (E)(Fig. 1, Fig. 7).

9. Multistage gearbox according to any of claims 1 to 7, **characterised in that** the first differential shaft (d1.1) of the first 3-shaft gearbox (RS1) and the first differential shaft (d1.2) of the second 3-shaft gearbox (RS2) may be rotation-connected to the second differential shaft (d2.2) of the second 3-shaft gearbox (RS2) by means of a fifth shifting element (E), preferably configured as a shaft coupling (E)(Fig. 4).

10. Multistage gearbox according to any of claims 1 to 9, **characterised in that** the sum shaft (s2) of the second 3-shaft gearbox (RS2) may be rotation-connected to the first differential shaft (d1.3) of the third 3-shaft gearbox (RS3) by means of a sixth shifting element (F), preferably configured as a shaft coupling (Fig. 7).

## Revendications

1. Transmission à plusieurs étages pour des véhicules automobiles comprenant plusieurs rapports de vitesse de marche avant et au moins un rapport de vitesse de marche arrière constituée de plusieurs transmissions à 3 arbres et de plusieurs éléments de commutation, avec un arbre d'entrainement (W1), un arbre de sortie (W2) et plusieurs arbres de transmission, arbres différentiels et arbres additionnels, un premier arbre différentiel (d1.1) d'une première transmission à 3 arbres (RS1) étant, en particulier par l'intermédiaire d'un premier arbre de transmission (W3) relié solidairement en rotation à un premier arbre différentiel (d1.2) d'une seconde transmission à 3 arbres (RS2), l'arbre d'entrainement (W1) et un arbre additionnel (s2) de la seconde transmission à 3 arbres (RS2) étant reliés solidairement en rotation, un quatrième arbre de transmission (W6 ; W76) et un second arbre différentiel (d2.2) de la seconde transmission à 3 arbres (RS2) étant reliés solidairement en rotation et le quatrième arbre de transmission (W6 ; W76) ou un cinquième arbre de transmission (W7) étant relié solidairement en rotation à un premier arbre différentiel (d1.3) d'une troisième transmission à 3 arbres (RS3), et un troisième arbre de transmission (W5) et un second arbre différentiel (d2.1) de la première transmission à 3 arbres (RS1) étant reliés solidairement en rotation,
**caractérisée en ce qu'**
un arbre additionnel (s1) de la première transmission à 3 arbres (RS1), est, de préférence par l'intermédiaire d'un second arbre de transmission (W4) relié solidairement en rotation a un arbre additionnel (s3) de la troisième transmission à 3 arbres (RS3), et, l'arbre de sortie (W2) et un second arbre différentiel (d2.3) de la troisième transmission à 3 arbres (RS3) sont reliés solidairement en rotation.

2. Transmission à plusieurs étapes conforme à la revendication 1,
**caractérisée en ce que**
la seconde transmission à 3 arbres (RS2) est réalisée sous la forme d'une transmission positive - de préférence avec deux groupes de roues planétaires engrenant les unes avec les autres - (figure 4, figure 13).

3. Transmission à plusieurs étapes conforme à la revendication 1 ou 2,
**caractérisée en ce que**
le premier arbre différentiel (d1.1) de la première transmission à 3 arbres (RS1) et le premier arbre différentiel (d1.2) de la seconde transmission à 3 arbres (RS2) peuvent être bloqués par l'intermédiaire d'un premier élément de commutation (A) de préférence réalisé sous la forme d'un frein.

4. Transmission à plusieurs étages conforme à l'une des revendications 1 à 3,
**caractérisée en ce que**
le second arbre différentiel (d2.1) de la première transmission à 3 arbres (RS1) peut être bloqué par l'intermédiaire d'un second élément de commutation (B) de préférence réalisé sous la forme d'un frein.

5. Transmission à plusieurs étages conforme à l'une des revendications 1 à 4,
**caractérisée en ce que**
le premier ou le second arbre différentiel (d1.1, d2.1) de la première transmission à 3 arbres (RS1) est solidaire en rotation d'un moteur électrique (EM) (figure 12, figure 13, figure 15).

6. Transmission à plusieurs étages conforme à l'une des revendications 1 à 5,
**caractérisée en ce que**
le second arbre différentiel (d2.2) de la seconde transmission à 3 arbres (RS2) peut être relié solidairement en rotation à l'arbre additionnel (s3) de la troisième transmission à 3 arbres (RS3) par l'intermédiaire d'un troisième élément de commutation (C) de préférence réalisé sous la forme d'un accouplement d'arbres.

7. Transmission à plusieurs étages conforme à l'une des revendications 1 à 6,
**caractérisée en ce que**
le second arbre différentiel (d2.2) de la seconde transmission à 3 arbres (RS2) peut être relié solidairement en rotation au premier arbre différentiel (d1.3) de la troisième transmission à 3 arbres (RS3) par l'intermédiaire d'un quatrième élément de commutation (D) réalisé de préférence sous la forme d'un accouplement d'arbres (figure 1, figure 7).

8. Transmission à plusieurs étages conforme à l'une des revendications 1 à 7,
**caractérisée en ce que**
le premier arbre différentiel (d1.1) de la première transmission à 3 arbres (RS1) et le premier arbre différentiel (d1.2) de la seconde transmission à 3 arbres (RS2) peuvent être reliés solidairement en rotation au premier arbre différentiel (d1.3) de la troisième transmission à 3 arbres (RS3) par l'intermédiaire d'un cinquième élément de commutation (E) de préférence réalisé sous la forme d'un accouplement d'arbres (E) (figure 1, figure 7).

9. Transmission à plusieurs étages conforme à l'une des revendications 1 à 7,
**caractérisée en ce que**
le premier arbre différentiel (d1.1) de la première transmission à 3 arbres (RS1) et le premier arbre différentiel (d1.2) de la seconde transmission à 3 arbres (RS2) peuvent être reliés solidairement en rotation au second arbre différentiel (d2.2) de la seconde transmission à 3 arbres (RS2) par l'intermédiaire d'un cinquième élément de commutation (E) de préférence réalisé sous la forme d'un accouplement d'arbres (E) (figure 4).

10. Transmission à plusieurs étages conforme à l'une des revendications 1 à 9,
**caractérisée en ce que**
l'arbre additionnel (s2) de la seconde transmission à 3 arbres (RS2) peut être relié solidairement en rotation au premier arbre différentiel (d1.3) de la troisième transmission à 3 arbres (RS3) par l'intermédiaire d'un sixième élément de commutation (F) de préférence réalisé sous la forme d'un accouplement d'arbres (figure 7).
